# EUROPÄISCHE PATENTSCHRIFT

(11) **EP 4 438 833 B1**
(45) Veröffentlichungstag und Bekanntmachung des Hinweises auf die Patenterteilung: **04.02.2026**
(21) Anmeldenummer: 23165867.5
(22) Anmeldetag: 31.03.2023
(51) Int. Cl.: E04F 15/024, C08K 5/07, C08L 23/06, C08L 23/10

(54) **KANTENLEISTE, INSBESONDERE DOPPELBODENKANTENLEISTE**
EDGE STRIP, IN PARTICULAR DOUBLE-FLOOR EDGE STRIP
BAGUETTE DE BORDURE, EN PARTICULIER BAGUETTE DE BORDURE DE FAUX PLANCHER SURÉLEVÉ

(43) Veröffentlichungstag der Anmeldung: 02.10.2024
(73) Patentinhaber: Fritz Egger GmbH & Co. OG, 6380 St. Johann in Tirol (AT)
(72) Erfinder: Streichardt, Thomas, 48231 Warendorf (DE); Schwermer, Peter Florian, 57399 Kirchhundem (DE); Lafleur, Jean-Pascal, 59939 Olsberg (DE)
(74) Vertreter: Cohausz & Florack

(56) Entgegenhaltungen:
- EP-A1- 0 690 095
- DE-U1- 202007 017 234
- DE-U1- 202012 100 911

## Beschreibung

Die Erfindung betrifft eine Kantenleiste, insbesondere eine Kantenleiste für Doppelböden, umfassend einen thermoplastischen Werkstoff. Die Erfindung betrifft ferner ein Verfahren zur Herstellung der Kantenleiste. Die Erfindung betrifft außerdem ein Doppelbodenelement.

Doppelböden sind eine Bodenkonstruktion für den Innenausbau von Gebäuden, die unter ihrer gesamten Fläche einen Installationsraum für die Unterbringung aller gebäudetechnischen Installationen und Ver- und Entsorgungsleitungen (z.B. Kabel, etc.) bilden und jederzeit an jeder Stelle den freien Zugang zu diesem Hohlraum gestatten. Des Weiteren können mit Doppelböden beispielsweise Unebenheiten des Unterbodens ausgeglichen werden, da die Doppelbodenplatten in der Regel auf höhenverstellbaren Stützen montiert sind.

Aus dem Stand der Technik sind verschiedene Doppelbodenelemente bekannt, die sich beispielsweise in Trägermaterial, Belag, Abmessung und Dicke unterscheiden. Die Abmessungen eines Doppelbodenelements liegen üblicherweise im Bereich von 600/600 mm bis 1200/1200 mm, mit Dicken von 19 bis 50 mm, je nach Belastungsanforderung und verwendetem Werkstoff. Besonders häufig sind Dicken im Bereich von 30 bis 38 mm.

Zusätzlich zu Anforderungen an die Statik und Belastbarkeit der Doppelbodenelemente müssen auch gewisse Brandschutzklassen eingehalten werden, wie beispielsweise in DIN EN 13501 (Klassifizierung von Bauprodukten und Bauarten zu ihrem Brandverhalten) geregelt.

Aus US 3 811 237 ist ein Doppelbodensystem bekannt, in dem die Bodenplatten eine Tragschicht aus Holzpartikeln aufweisen. Bei bestimmungsgemäßem Gebrauch kann es jedoch durch Potentialdifferenzen der Werkstoffe der Bodenplatten und den Benutzern zu elektrostatischer Auf- und Entladung kommen. In US 3 811 237 wird daher die Unterseite mit einer Blechplatte beschichtet, während die Oberseite mit einem Teppichmaterial bedeckt ist. Dieses erstreckt sich über die Stirnseite der Platte hinaus bis zur Unterseite, wodurch die elektrostatische Ladung von der Ober- zur Unterseite der Platte transportiert und dann über die Metallstützen in den Boden abgeleitet werden kann.

Alternativ können an den Bodenplatten Kantenleisten aus einem elektrisch leitfähigen Kunststoffmaterial eingesetzt werden, um die Ladung abzuleiten. Dies ist beispielsweise in DE 20 2007 017 234 U1 und EP 1 696 038 A2 beschrieben. Dabei sind elektrische Widerstände der Kantenleiste von 10² bis 10⁹ Ohm bevorzugt, da eine zu große Leitfähigkeit unerwünscht ist. Die Kantenleisten sind üblicherweise ca. 0,5 mm dick und werden in der Regel mittels eines Schmelzklebers auf der Seitenfläche der Bodenplatte angebracht. Neben der Ableitung elektrostatischer Ladung dienen die Kantenleisten zusätzlich dazu, die Kanten der Bodenplatten zu schützen.

Als Material für die Kantenleiste werden im Stand der Technik üblicherweise Kunststoffe verwendet, vorzugsweise thermoplastische Werkstoffe. Weit verbreitet ist die Verwendung von Acrylnitril-Butadien-Styrol-Copolymer oder Polyvinylchlorid, aber auch andere thermoplastische Polymere können verwendet werden.

Um elektrisch leitfähige Kantenleisten zu erhalten, schlägt die DE 20 2012 100 911 U1 einerseits vor, polymere Werkstoffe einzusetzen, die durch die Gegenwart von konjugierten Doppelbindungen selbst leitfähig sind, wie z.B. Polyanilin, Polypyrrol, Polythiophen, und andere. Andererseits schlägt die DE 20 2012 100 911 U1 vor, Polymere, die nicht selbst elektrisch leitfähig sind, durch Zugabe eines kohlenstoff- oder metallbasierten Leitfähigkeitsadditivs leitfähig zu machen.

Durch die Zugabe der genannten Leitfähigkeitsadditive ändern sich regelmäßig die Eigenschaften der daraus erhaltenen Kantenbänder auch dahingehend, dass sie bei Reibung aneinander Geräusche, so genannte Knarr- oder Knarzgeräusche erzeugen. Neben der elektrostatischen Aufladung beim Begehen von Doppelböden, die durch leitfähige Kanten reduziert werden kann, liegt damit dann jedoch ein weiteres Problem von Doppelböden darin, dass beim Begehen der Doppelböden Knarrgeräusche auftreten, die durch die Relativbewegung der Elemente aneinander verursacht werden. Verschiedene Ansätze sind im Stand der Technik vorgeschlagen worden, um das Knarrverhalten von Doppelbodenelementen die mit Kantenleisten aus einem elektrisch leitfähigen Kunststoffmaterial versehen sind, zu verbessern.

So schlägt die DE 20 2007 017 234 U1 vor, dem Material der Kantenleiste Graphit zuzugeben. Dies soll das Knarren verringern, indem die Kantenleisten leichter aneinander gleiten.

Die WO 2014/076665 A1 schlägt zur Reduzierung der Knarrgeräusche eine Lackbeschichtung aus UV-Lacken, ESH-Lacken oder UV-Wasserlacken vor, die elektrisch leitfähig ist und Tritt- und Knarzgeräusche verhindern soll. Das Aufbringen eines Lacks erfordert allerdings einen zusätzlichen Verfahrensschritt. Außerdem muss der Lack trocknen, was weitere Anforderungen an die Arbeitssicherheit hervorrufen kann.

Die EP 1 696 083 A2 wiederum schlägt vor, Kantenleisten mit Strukturierungen auf der Oberfläche zu versehen, die eine Rautiefe von etwa 10 bis 40 µm aufweisen und die zu einer Reduzierung der Geräusche bei einander gegenüberliegenden die Kantenleisten aufweisenden Doppelbodenplatten führen sollen. Das Einbringen von Strukturierungen erfordert allerdings einen weiteren Verfahrensschritt, beispielsweise einen Prägeschritt. Ferner ist der Abrieb bei Strukturierungen ein Problem.

Aus dem Vorstehenden folgt, dass Kantenleisten, insbesondere Doppelbodenkantenleisten mit verbessertem Knarrverhalten wünschenswert sind. Daher ist es Aufgabe der vorliegenden Erfindung, das Knarrverhalten einer entsprechenden Kantenleiste zu verbessern. Idealerweise lässt sich die Kantenleiste auch einfacher herstellen.

Andere und weitere Aufgaben, Eigenschaften und Vorteile der vorliegenden Erfindung werden in der folgenden Beschreibung weiter erläutert.

Erfindungsgemäß wird die vorliegende Aufgabe durch die Kantenleiste gemäß Anspruch 1, das Verfahren zu dessen Herstellung gemäß Anspruch 13, und das Doppelbodenelement gemäß Anspruch 15 gelöst.

Dementsprechend stellt die Erfindung eine Kantenleiste, insbesondere eine Doppelbodenkantenleiste, enthaltend einen thermoplastischen Werkstoff, ein Leitfähigkeitsadditiv und ein Tribologie-Additiv bereit, wobei das Tribologie-Additiv ein Kunststoff ist.

Ferner stellt die Erfindung ein Verfahren zur Herstellung einer Kantenleiste umfassend die Schritte
a) Bereitstellen einer Zusammensetzung enthaltend einen thermoplastischen Werkstoff, ein Leitfähigkeitsadditiv und ein Tribologie-Additiv, wobei das Tribologie-Additiv ein Kunststoff ist,
b) Zuführen von mechanischer und/oder thermischer Energie zu der Zusammensetzung aus Schritt a) um eine Formmasse zu erhalten,
c) Formen der Kantenleiste aus der Formmasse,
bereit.

Außerdem stellt die Erfindung ein Doppelbodenelement umfassend eine Platte sowie eine daran befestigte erfindungsgemäße Kantenleiste bereit.

Überraschenderweise wurde festgestellt, dass eine Kantenleiste, die einen thermoplastischen Werkstoff, ein Leitfähigkeitsadditiv sowie ein Tribologie-Additiv enthält, bei guten Leitfähigkeitseigenschaften eine Reduzierung in den Knarrgeräuschen aufweist.

Ohne an eine wissenschaftliche Theorie gebunden sein zu wollen, scheinen durch die Zugabe eines Tribologie-Additivs zu dem thermoplastischen Werkstoff der Kantenleiste die Reibungseigenschaften der Kantenleiste bei Reibung von zwei Kantenleisten aneinander derart verbessert zu werden, dass die Geräuschentwicklung stark reduziert und damit das Knarrverhalten verbessert werden kann. Gleichzeitig können gute Leitfähigkeitseigenschaften festgestellt werden.

Da dem thermoplastischen Werkstoff bei der Herstellung der Kantenleiste zwei Additive zugegeben werden, um die Leitfähigkeit und das Knarrverhalten der Kantenleiste zu verbessern, ist die erfindungsgemäße Kantenleiste einfach herzustellen. Insbesondere sind keine nachgeschalteten Lackier- oder Prägeschritte erforderlich. Darüber hinaus gibt es keine Abnutzung im Gebrauch wie beispielsweise bei der Aufbringung einer Lackschicht oder der Einbringung einer Struktur. Daher kommt es auch bei dauerhafter Anwendung zu keiner Verschlechterung des Knarrverhaltens.

Somit offenbart die vorliegende Erfindung die Möglichkeit, Kantenleisten mit verbessertem Knarrverhalten bereitzustellen, die gleichzeitig mit einem einfacheren Verfahren hergestellt werden können. Ferner lässt sich das Herstellungsverfahren flexibel einsetzen und ist mit vielen thermoplastischen Kunststoffen kompatibel. Insbesondere können auch thermoplastische Kunststoffe zum Einsatz kommen, die im Brandfall wenig problematisch sind.

Im Folgenden werden verschiedene Ausführungsformen der Kantenleiste, des Verfahrens zur Herstellung, und des Doppelbodenelements beschrieben, wobei die einzelnen Ausführungsformen jeweils unabhängig voneinander für die Kantenleiste, das Verfahren zur Herstellung, und das Doppelbodenelement gelten. Darüber hinaus können die einzelnen Ausführungsformen beliebig miteinander kombiniert werden.

Die erfindungsgemäße Kantenleiste enthält einen thermoplastischen Werkstoff.

In einer vorteilhaften Ausführungsform ist der thermoplastische Werkstoff ein thermoplastischer Kunststoff. Verschiedene thermoplastische Kunststoffe kommen in Frage. Vorzugsweise ist der thermoplastische Werkstoff, insbesondere der thermoplastische Kunststoff, ausgewählt aus der Gruppe bestehend aus Polyvinylchlorid, Polypropylen, Polyethylen, Polystyrol, Styrol-Butadien-Copolymere, Acrylnitril-Styrol-Acrylester-Copolymere, Acrylnitril-Butadien-Styrol-Copolymere, Styrolacrylnitril, Polybutylentherephthalat, Polyethylentherephthalat, Polyoxymethylen, Polyamid, Polymethylmethacrylat, Polyphenylenoxid, Polyetheretherketon, Polyphenylensulfid, Liquid Crystal Polymer, Polyamidimide, Polyvinylidenfluorid, Polyphenylsulfon, Polyaryletherketon, Polyacrylnitril, Polychlortrifluorethylen, Polyetherketon, Polyimid, Polyisobuten, Polyphthalamid, Polypyrrol, Polytetrafluorethylen, Polyurethan, Polyvinylalkohol, Polyvinylacetat, Polyvinylidenchlorid, Polymilchsäure und Mischungen davon. Bevorzugt ist der thermoplastische Werkstoff ausgewählt aus der Gruppe bestehend aus Acrylnitril-Butadien-Styrol-Copolymere, Polyvinylchlorid, Polymethylmethacrylat, Polyethylen, Polymilchsäure und Polypropylen. Weiter bevorzugt ist der thermoplastische Werkstoff ausgewählt aus der Gruppe bestehend aus Acrylnitril-Butadien-Styrol-Copolymere, Polymethylmethacrylat, Polyethylen, Polymilchsäure und Polypropylen. Besonders bevorzugt ist der thermoplastische Werkstoff Polypropylen.

Die erfindungsgemäße Kantenleiste kann den thermoplastischen Werkstoff in unterschiedlichen Mengen enthalten. Vorzugsweise enthält die Kantenleiste den thermoplastischen Werkstoff in einer Menge von 30 bis 90 Gew.-%, bevorzugt 30 bis 80 Gew.-%, besonders bevorzugt 40 bis 80 Gew.-%, bezogen auf das Gesamtgewicht der Kantenleiste.

Die erfindungsgemäße Kantenleiste enthält ein Leitfähigkeitsadditiv. Damit kann die Leitfähigkeit der Kantenleiste eingestellt werden. Verschiedene Leitfähigkeitsadditive kommen in Frage. Vorzugsweise ist das Leitfähigkeitsadditiv kohlenstoffbasiert oder metallbasiert. In einer vorteilhaften Ausführungsform ist das Leitfähigkeitsadditiv ausgewählt aus der Gruppe bestehend aus Ruß, Graphit, Kohlenstoffnanoröhrchen, Kohlenstofffasern, Metallpartikeln, metallbeschichteten Glasfasern und Mischungen davon. Besonders bevorzugt ist das Leitfähigkeitsadditiv Ruß. Mit den vorstehend genannten Leitfähigkeitsadditiven lässt sich die Leitfähigkeit der Kantenleiste gut einstellen.

Die erfindungsgemäße Kantenleiste kann das Leitfähigkeitsadditiv in unterschiedlichen Mengen enthalten. Zweckmäßigerweise enthält die Kantenleiste das Leitfähigkeitsadditiv in einer Menge von 1 bis 50 Gew.-%, bevorzugt 10 bis 40 Gew.-%, besonders bevorzugt 15 bis 30 Gew.-%, bezogen auf das Gesamtgewicht der Kantenleiste.

Das Knarrverhalten des Doppelbodenelements wird erfindungsgemäß verbessert, indem dem Werkstoff der Kantenleiste ein Tribologie-Additiv zugefügt wird, wobei das Tribologie-Additiv ein Kunststoff ist.

Die Kantenleiste enthält das Tribologie-Additiv neben dem thermoplastischen Werkstoff. Das Tribologie-Additiv kann insbesondere gute Reibeigenschaften aufweisen. Bevorzugt ist der Kunststoff Polytetrafluorethylen, Polyoxymethylen, Polyketon, Polyethylen oder eine Mischung davon. Als Polyethylen kommt vorzugsweise UHMW-Polyethylen zum Einsatz.

Besonders bevorzugt ist der Kunststoff Polyketon oder UHMW-Polyethylen.

UHMW-Polyethylen steht für ultrahochmolekulares Polyethylen. UHMW-Polyethylen hat vorzugsweise ein Molekulargewicht, insbesondere ein gewichtsmittleres Molekulargewicht, von 1'000'000 g/mol bis 10'000'000 g/mol. Methoden zum Bestimmen des Molekulargewichts sind dem Fachmann bekannt. Das Molekulargewicht kann mittels Lösemittelviskosimetrie (Kapillare) nach ISO 1628-3:2010 mit Berechnung der Molmasse nach Mark-Houwink bestimmt werden.

Polyketon zeichnet sich besonders durch seine gute Verarbeitbarkeit und seine hohe Wirksamkeit als Tribologie-Additiv aus.

Vorzugsweise weist das Polyketon eine Schmelztemperatur von 190°C bis 250°C, weiter bevorzugt von 200°C bis 240°C, besonders bevorzugt von 210°C bis 230°C, gemessen nach ISO 11357, auf.

Ferner weist das Polyketon vorzugsweise einen Schmelzflussindex von 40 g/10 min bis 80 g/10 min, weiter bevorzugt von 50 g/10 min bis 70 g/10 min, gemessen nach ASTM D1238 bei einer Temperatur von 240°C mit einem Gewicht von 2,16 kg auf.

Polyketon kann insbesondere durch Copolymerisation eines oder mehrerer Olefine wie Ethylen oder Propylen mit Kohlenstoffmonoxid erhalten werden.

Angesichts der bisherigen Versuche im Stand der Technik, das Knarrverhalten von Kantenleisten beispielsweise durch die Zugabe von Graphit oder durch die Verwendung von außen aufgetragenen Lacken zu verbessern, ist es überraschend, dass ein Kunststoff wie Polyethylen oder Polyketon sich dazu eignet, das Knarrverhalten zu verbessern. Gerade gegenüber Lacken stellt die Zugabe eines Kunststoffes zur Kantenleiste eine Vereinfachung in der Herstellung dar, da kein zusätzlicher Arbeitsschritt an der geformten Kante erforderlich ist. In Bezug auf Graphit haben Kunststoffe den Vorteil, dass sie keine starke Einfärbung bewirken.

Die erfindungsgemäße Kantenleiste kann das Tribologie-Additiv in unterschiedlichen Mengen enthalten. Zweckmäßigerweise enthält die Kantenleiste das Tribologie-Additiv in einer Menge von 5 bis 25 Gew.-%, bevorzugt 10 bis 20 Gew.-%, bezogen auf das Gesamtgewicht der Kantenleiste.

Die elektrische Leitfähigkeit der Kantenleiste ist eine wichtige Eigenschaft, da sie dazu dient, die während der Benutzung entstehende elektrostatische Ladung sicher abzuleiten. Gerade in Räumen mit elektrischen Geräten ist diese Eigenschaft von hoher Bedeutung. In einer vorteilhaften Ausführungsform weist das Material der Kantenleiste daher eine elektrische Leitfähigkeit gemessen im Durchgang von 5*10⁻¹⁰ bis 5*10⁻⁶ S auf.

Weiterhin ist es vorteilhaft, dass die erfindungsgemäße Kantenleiste einen guten Oberflächenwiderstand aufweist. Gemäß einer Ausführungsform weist die Kantenleiste einen Oberflächenwiderstand von 10⁶ Ohm oder weniger, bevorzugt 5*10⁵ Ohm oder weniger, weiter bevorzugt 10⁵ Ohm oder weniger, besonders bevorzugt 5*10⁴ Ohm oder weniger, gemessen nach IEC 61340-4-1, insbesondere IEC 61340-4-1 Ausgabe 2016-04, auf. Vorzugsweise weist die Kantenleiste einen Oberflächenwiderstand von 10² Ohm oder mehr auf. Durch die vorgenannten Oberflächenwiderstände kann die Ableitung von elektrostatischer Aufladung durch die Kantenleiste gut erfolgen.

Ferner ist es vorteilhaft, wenn die Kantenleiste einen guten Durchgangswiderstand aufweist. Entsprechend weist die erfindungsgemäße Kantenleiste in einer weiteren vorteilhaften Ausführungsform einen Durchgangswiderstand von 10⁶ Ohm oder weniger, bevorzugt 5*10⁵ Ohm oder weniger, weiter bevorzugt 10⁵ Ohm oder weniger, besonders bevorzugt 5*10⁴ Ohm oder weniger, gemessen nach IEC 61340-4-1, insbesondere IEC 61340-4-1 Ausgabe 2016-04, auf. Vorzugsweise weist die Kantenleiste einen Durchgangswiderstand von 10² Ohm oder mehr auf.

Auch das Brandverhalten ist eine wichtige Eigenschaft für die Anwendung der Kantenleiste in Doppelbodensystemen. In einer vorteilhaften Ausführungsform weist die erfindungsgemäße Kantenleiste ein Brandverhalten von mindestens Klasse E gemäß der Norm DIN EN 13501, insbesondere DIN EN 13501-1:2019-05, auf.

Die vorliegende Erfindung stellt eine Kantenleiste mit verbessertem Knarrverhalten bereit. Insbesondere weist die erfindungsgemäße Kantenleiste ein reduziertes Knarren auf.

Das Knarrverhalten der Kantenleiste kann mit der nachfolgend beschriebenen Knarrprüfmethode untersucht werden. Als Prüfkörper dient eine 41 mm starke, stirnseitig gefaste (4°) Spanplatte, die an allen vier Seiten mit der zu prüfenden Kante versehen wird. Es werden zwei dieser Prüfkörper hergestellt. Die beiden Prüfkörper werden auf einen rechteckigen Stahlrahmen, der die doppelte Größe eines Prüfkörpers aufweist und an jeder Ecke sowie jeweils in der Mitte der langen Seite eine vertikale Stütze zur Lagerung der Platten aufweist, gelegt, so dass sich die Platten an einer Seitenfläche berühren. Der Stahlrahmen weist an einer kurzen Seite einen horizontalen Anschlag auf, von der Gegenseite werden die Platten mit Hilfe eines pneumatisch verfahrbaren Anschlags fixiert und die Einspannkraft der Platten eingestellt.

Das Knarrverhalten wird über einen Zeitraum von drei Tagen untersucht. Am ersten Tag werden die Platten horizontal mit einer Kraft von 300 N eingespannt. Anschließend werden die beiden Platten mit Hilfe von Pneumatikzylindern in vertikaler Richtung wechselseitig periodisch von oben jeweils in der Nähe der Seite (je 5 cm von der Seite entfernt), an der sich die Platten berühren, belastet. Die Platten werden dabei 900 mal pro Stunde mit einer Kraft von 1250 N belastet (entspricht 900 Zyklen pro Stunde). Am zweiten Tag wird die horizontale Einspannkraft auf 600 N, am dritten Tag auf 800N erhöht, wobei die Erhöhung der Einspannkraft bei laufender Prüfung erfolgt. Insgesamt werden mindestens 54000 Belastungszyklen pro Kanten- bzw. Plattenpaar durchgeführt. Schabende bzw. knarrende Geräusche, die bei mehr als 100 Zyklen am Stück auftreten, werden mit Prüfdatum und -uhrzeit dokumentiert (leise - mittel - deutlich). Treten keine Geräusche auf, wird dies ebenfalls alle zwei Stunden dokumentiert. Temperatur und Luftfeuchtigkeit werden ebenfalls dokumentiert.

Die erfindungsgemäße Kantenleiste kann verschiedene Größen aufweisen. In einer Ausführungsform weist die Kantenleiste eine Dicke von 0,2 bis 5 mm, bevorzugt 0,2 bis 2 mm, weiter bevorzugt 0,2 bis 1 mm, auf. Gemäß einer weiteren Ausführungsform weist die Kantenleiste eine Breite von 10 bis 120 mm, bevorzugt von 25 bis 60 mm auf.

Zur Verwendung in einem Doppelbodensystem muss die Kantenleiste an der Bodenplatte befestigt werden. Vorzugsweise wird die Kantenleiste mit einem Schmelzkleber an der Bodenplatte befestigt. Ein Schmelzkleber wird vorzugsweise beim Anbringen der Kantenleiste an der Bodenplatte auf die Kantenleiste aufgebracht. Gemäß einer Ausführungsform umfasst die Kantenleiste einen Haftvermittler und/oder einen Schmelzkleber, insbesondere eine Haftvermittlerschicht. Gemäß einer Ausführungsform umfasst die Kantenleiste einen Haftvermittler, insbesondere eine Haftvermittlerschicht. Damit kann die Haftung zwischen Kantenleiste und Schmelzkleber verbessert werden.

Verschiedene Schmelzkleber kommen in Betracht. Vorzugsweise ist der Schmelzkleber ein Schmelzkleber auf Basis eines Polyamids, eines Polyethylens, eines amorphen Polyalphaolefins, eines Polyesterelastomers, eines thermoplastischen Polyurethans (TPU), eines reaktiven Polyurethans, eines Ethylenvinylacetat-Copolymers, oder eines Copolyamidelastomers.

Um die Reibwirkung weiter zu verringern, können weitere Maßnahmen ergriffen werden. In einer vorteilhaften Ausführungsform der erfindungsgemäßen Kantenleiste ist ein Vlies auf der Kantenleiste auflaminiert. Vorzugsweise ist das Vlies auf die Seite auflaminiert, die der an die Platte anzubringenden Seite gegenüber liegt. Die Verformbarkeit des Vlieses kann die Reibwirkung weiter verringern.

Wie eingangs beschrieben, ist ein weiterer Aspekt der vorliegenden Erfindung ein Verfahren zur Herstellung der erfindungsgemäßen Kantenleiste umfassend das Bereitstellen einer Zusammensetzung sowie das Zuführen von mechanischer und/oder thermischer Energie zur Zusammensetzung, um eine Formmasse zu erhalten, aus der die Kantenleiste geformt wird.

In einer Ausführungsform wird die Zusammensetzung als Masterbatch bereitgestellt. Denkbar ist aber auch, dass die Zusammensetzung durch das Zusammenmischen der einzelnen Komponenten bereitgestellt wird.

Das Zuführen von mechanischer und/oder thermischer Energie zu der Zusammensetzung kann auf verschiedene Art und Weise erfolgen. Beispielsweise kann die Zusammensetzung aufgeschmolzen werden, mit einem Mischer gemischt werden und/oder in einem Extruder behandelt werden. Gemäß einer bevorzugten Ausführungsform umfasst das Verfahren einen Extrusionsschritt. Beispielsweise kann die Kantenleiste mittels Extrusion und nachgeschaltetem Kalander hergestellt werden. Dies erhöht die Qualität und Wirtschaftlichkeit in der Herstellung der Kantenleiste.

Als weiteren Aspekt betrifft die Erfindung schließlich ein Doppelbodenelement, umfassend eine Platte sowie eine daran befestigte erfindungsgemäße Kantenleiste.

Das Doppelbodenelement kann ferner noch eine Auflageplatte, eine Stütze, eine Kopfplatte und/oder eine Fußplatte umfassen. Vorzugsweise umfasst das Doppelbodenelement alle vorgenannten Bestandteile.

Nachfolgend wird die Erfindung noch durch die beispielhaften Zeichnungen näher erläutert, wobei die Zeichnungen in keiner Weise limitierend sind. Gleiche Bezugszeichen beziehen sich auf gleiche Elemente. In den Zeichnungen zeigen:
Fig. 1 eine Seitenansicht in einem Doppelboden, wobei die Platten mit der erfindungsgemäßen Kantenleiste bekantet sind, und
Fig. 2 eine Aufsicht auf einen Ausschnitt eines Doppelbodens, wobei die Platten mit der erfindungsgemäßen Kantenleiste bekantet sind.

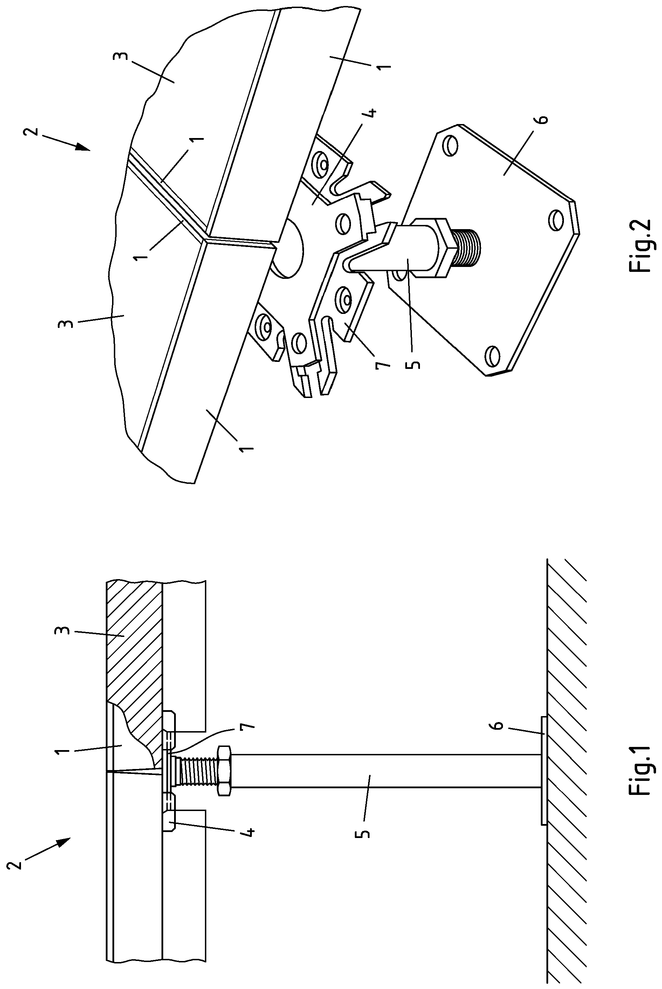

In der Figur 1 ist eine Seitenansicht eines Teils eines Doppelbodens gezeigt umfassend Doppelbodenelemente 2. Das Doppelbodenelement 2 umfasst eine Spanplatte 3, die 4° gefast ist und an allen vier Schmalseiten eine erfindungsgemäße Kantenleiste 1 aufweist. Die Kantenleiste 1 ist dabei mit einem Schmelzkleber an die Spanplatte 3 angebracht worden und weist zur besseren Haftung des Schmelzklebers an der Kantenleiste 1 einen Haftvermittler an der zur Spanplatte ausgerichteten Seite auf. Die Kantenleiste 1 ist aus Polypropylen und enthält etwa 24 Gew.-% Ruß sowie etwa 20 Gew.-% Polyketon.

Die bekanteten Platten liegen auf einer Auflageplatte 4 auf, die ihrerseits mit einer Kopfplatte 7 verbunden ist. Die Kopfplatte 7 ist mit einer Stütze 5 verbunden, die an einer Fußplatte 6 befestigt ist. Wie Figur 1 zu entnehmen ist, liegen die bekanteten Platten so, dass sich aufgrund der Fasen an den Platten ein dreieckiger Spalt bildet, der sich nach oben hin schließt. Diese Anordnung der Platten wird auch für die Knarrprüfmethode eingesetzt.

Figur 2 zeigt eine andere Ansicht des Teils des Doppelbodens umfassend Doppelbodenelemente 2 aus Figur 1. Die mit der erfindungsgemäßen Kantenleiste 1 bekanteten Spanplatten 3 liegen auf der Auflageplatte 4 auf, die auf der Kopfplatte 7 aufliegt, die über die Stütze 5 mit der Fußplatte 6 verbunden ist.

### BEISPIELE

Mischungen aus einem mit 40% Ruß gefüllten Polypropylen-Compound (PP-Cpd,) und reinem Polypropylen (PP) gemäß Tabelle 1 wurden hergestellt. Einigen der Kantenleisten wurden noch UHMW-Polyethylen (UHMW-PE) sowie Polyketon (PK) zugegeben.

**Tabelle 1: Mischungen von Polypropylen-Compound und Polypropylen (angegebene Komponenten in Gew.-%)**

| Nr. | 1^{a} | 2^{a} | 3 | 4 | 5 | 6 | 7 |
|---|---|---|---|---|---|---|---|
| PP-Cpd | 0 | 60 | 60 | 60 | 60 | 60 | 60 |
| PP | 100 | 40 | 35 | 25 | 35 | 25 | 20 |
| UHMW-PE | 0 | 0 | 5 | 15 | 0 | 0 | 0 |
| PK | 0 | 0 | 0 | 0 | 5 | 15 | 20 |

| | | | | | | | |
|---|---|---|---|---|---|---|---|
| Erläuterungen zu Tabelle 1: ^{a} - Vergleichsbeispiel. | | | | | | | |

Die Mischungen wurden jeweils anschließend einem Extruder zugeführt und die Kantenleisten 1 bis 7 daraus extrudiert.

Von den so erhaltenen Kantenleisten 1 bis 7 wurde der Oberflächenwiderstand nach IEC 61340-4-1, Ausgabe 2016-04, gemessen.

Anschließend wurden die Kantenleisten 1 bis 7 an 41mm starke, stirnseitig gefaste (4°) Spanplatten für Doppelbodenelemente mittels Schmelzkleber montiert. Alle Kantenleisten hafteten gut an den Platten.

Sodann wurde von diesen bekanteten Doppelbodenelementen das Knarrverhalten nach der oben beschriebenen Knarrprüfmethode bestimmt, wobei jeweils zwei der Spanplatten mit den Kantenleisten 1 bis 7 (an allen vier Seiten bekantet) als Prüfkörper verwendet wurden. Die Ergebnisse sind in Tabelle 2 wiedergegeben.

**Tabelle 2: Oberflächenwiderstand und Knarrverhalten der Kantenleisten 1 bis 7**

| Nr. | 1^{a} | 2^{a} | 3 | 4 | 5 | 6 | 7 |
|---|---|---|---|---|---|---|---|
| OW^{b} | >10³ | 10 | 13 | 16 | 11 | 13 | 14 |
| KV^{c} | ++ | - | 0 | + | 0 | + | ++ |

| | | | | | | | |
|---|---|---|---|---|---|---|---|
| Erläuterungen zu Tabelle 2: ^{a} - Vergleichsbeispiel; ^{b} - OW: Oberflächenwiderstand in Kiloohm; ^{c} - KV: Knarrverhalten ++: kein hörbares Knarren, +: leises, nur vorübergehendes Knarren, 0: leises Knarren, - lautes Knarren. | | | | | | | |

Wie aus Tabelle 2 ersichtlich, konnte durch den Einsatz des mit Ruß gefüllten Polypropylen-Compounds der Oberflächenwiderstand deutlich reduziert werden (vgl. Kantenleiste 1 gegenüber Kantenleisten 2 bis 7). Dementsprechend wurde damit auch die elektrische Leitfähigkeit erhöht. Es zeigte sich allerdings auch, dass die Kantenleiste 2, die lediglich den Zusatz der kohlenstoffhaltigen Komponente Ruß enthielt, knarrte. Das Knarren konnte jedoch durch den Zusatz von UHMW-Polyethylen bzw. durch Polyketon verringert werden (vgl. Kantenleiste 2 gegenüber Kantenleisten 3-7).

## Patentansprüche

1. Kantenleiste (1), insbesondere Doppelbodenkantenleiste, enthaltend einen thermoplastischen Werkstoff, ein Leitfähigkeitsadditiv und ein Tribologie-Additiv, **dadurch gekennzeichnet, dass** das Tribologie-Additiv ein Kunststoff ist.

2. Kantenleiste (1) nach Anspruch 1, **dadurch gekennzeichnet, dass** der thermoplastische Werkstoff ein thermoplastischer Kunststoff ist, bevorzugt ausgewählt aus der Gruppe bestehend aus Polyvinylchlorid, Polypropylen, Polyethylen, Polystyrol, Styrol-Butadien-Copolymere, Acrylnitril-Styrol-Acrylester-Copolymere, Acrylnitril-Butadien-Styrol-Copolymere, Styrolacrylnitril, Polybutylentherephthalat, Polyethylentherephthalat, Polyoxymethylen, Polyamid, Polymethylmethacrylat, Polyphenylenoxid, Polyetheretherketon, Polyphenylensulfid, Liquid Crystal Polymer, Polyamidimide, Polyvinylidenfluorid, Polyphenylsulfon, Polyaryletherketon, Polyacrylnitril, Polychlortrifluorethylen, Polyetherketon, Polyimid, Polyisobuten, Polyphthalamid, Polypyrrol, Polytetrafluorethylen, Polyurethan, Polyvinylalkohol, Polyvinylacetat, Polyvinylidenchlorid, Polymilchsäure und Mischungen davon, weiter bevorzugt der thermoplastische Werkstoff ausgewählt ist aus der Gruppe bestehend aus Acrylnitril-Butadien-Styrol-Copolymere, Polyvinylchlorid, Polymethylmethacrylat, Polyethylen, Polymilchsäure und Polypropylen, besonders bevorzugt ist der thermoplastische Werkstoff Polypropylen.

3. Kantenleiste (1) nach einem der vorangegangenen Ansprüche, **dadurch gekennzeichnet, dass** das Leitfähigkeitsadditiv kohlenstoffbasiert oder metallbasiert ist, bevorzugt ausgewählt ist aus der Gruppe bestehend aus Ruß, Graphit, Kohlenstoffnanoröhrchen, Kohlenstofffasern, Metallpartikel, metallbeschichtete Glasfasern und Mischungen davon, besonders bevorzugt Ruß.

4. Kantenleiste (1) nach einem der vorangegangenen Ansprüche, **dadurch gekennzeichnet, dass** das Tribologie-Additiv Polytetrafluorethylen, Polyoxymethylen, Polyketon, Polyethylen, insbesondere UHMW-Polyethylen, oder eine Mischung davon ist, besonders bevorzugt Polyketon oder UHMW-Polyethylen.

5. Kantenleiste (1) nach einem der vorangegangenen Ansprüche, **dadurch gekennzeichnet, dass** das Material der Kantenleiste (1) eine elektrische Leitfähigkeit gemessen im Durchgang von 5*10⁻¹⁰ bis 5*10⁻⁶ S aufweist.

6. Kantenleiste (1) nach einem der vorangegangenen Ansprüche, **dadurch gekennzeichnet, dass** die Kantenleiste (1) einen Oberflächenwiderstand von 10⁶ Ohm oder weniger, bevorzugt 5*10⁵ Ohm oder weniger, weiter bevorzugt 10⁵ Ohm oder weniger, besonders bevorzugt 5*10⁴ Ohm oder weniger, gemessen nach IEC 61340-4-1, insbesondere IEC 61340-4-1 Ausgabe 2016-04, aufweist.

7. Kantenleiste (1) nach einem der vorangegangenen Ansprüche, **dadurch gekennzeichnet, dass** die Kantenleiste (1) einen Durchgangswiderstand von 10⁶ Ohm oder weniger, bevorzugt 5*10⁵ Ohm oder weniger, weiter bevorzugt 10⁵ Ohm oder weniger, besonders bevorzugt 5*10⁴ Ohm oder weniger, gemessen nach IEC 61340-4-1, insbesondere IEC 61340-4-1 Ausgabe 2016-04, aufweist.

8. Kantenleiste (1) nach einem der vorangegangenen Ansprüche, **dadurch gekennzeichnet, dass** die Kantenleiste (1) ein Brandverhalten von mindestens Klasse E gemäß der Norm DIN EN 13501 aufweist.

9. Kantenleiste (1) nach einem der vorangegangenen Ansprüche, **dadurch gekennzeichnet, dass** die Kantenleiste (1) eine Dicke von 0,2 bis 5 mm, bevorzugt 0,2 bis 2 mm, weiter bevorzugt 0,2 bis 1 mm und/oder eine Breite von 10 bis 120 mm, bevorzugt von 25 bis 60 mm aufweist.

10. Kantenleiste (1) nach einem der vorangegangenen Ansprüche, **dadurch gekennzeichnet, dass** die Kantenleiste (1) einen Haftvermittler und/oder einen Schmelzkleber umfasst, insbesondere eine Haftvermittlerschicht umfasst.

11. Kantenleiste (1) nach Anspruch 10, **dadurch gekennzeichnet, dass** der Schmelzkleber ein Schmelzkleber auf Basis eines Polyamids, eines Polyethylens, eines amorphen Polyalphaolefins, eines Polyesterelastomers, eines thermoplastischen Polyurethans (TPU), eines reaktiven Polyurethans, eines Ethylenvinylacetat-Copolymers, oder eines Copolyamidelastomers ist.

12. Kantenleiste (1) nach einem der vorangegangenen Ansprüche, **dadurch gekennzeichnet, dass** ein Vlies auf die Kantenleiste (1) auflaminiert ist.

13. Verfahren zur Herstellung einer Kantenleiste (1) nach einem der vorangegangenen Ansprüche umfassend die Schritte
a) Bereitstellen einer Zusammensetzung enthaltend einen thermoplastischen Werkstoff, ein Leitfähigkeitsadditiv und ein Tribologie-Additiv, wobei das Tribologie-Additiv ein Kunststoff ist,
b) Zuführen von mechanischer und/oder thermischer Energie zu der Zusammensetzung aus Schritt a) um eine Formmasse zu erhalten,
c) Formen der Kantenleiste (1) aus der Formmasse.

14. Verfahren nach Anspruch 13, **dadurch gekennzeichnet, dass** das Verfahren einen Extrusionsschritt umfasst.

15. Doppelbodenelement (2) umfassend eine Platte (3) sowie eine daran befestigte Kantenleiste (1) gemäß einem der Ansprüche 1 bis 12.

## Claims

1. An edging strip (1), in particular a raised floor edging strip, containing a thermoplastic material, a conductivity additive and a tribology additive, **characterized in that** the tribology additive is a plastic.

2. The edging strip (1) according to claim 1, **characterized in that** the thermoplastic material is a thermoplastic, preferably selected from the group consisting of polyvinyl chloride, polypropylene, polyethylene, polystyrene, styrene-butadiene copolymers, acrylonitrile-styrene-acrylic ester copolymers, acrylonitrile-butadiene-styrene copolymers, styrene-acrylonitrile, polybutylene terephthalate, polyethylene terephthalate, polyoxymethylene, polyamide, polymethyl methacrylate, polyphenylene oxide, polyetheretherketone, polyphenylene sulfide, liquid crystal polymer, polyamideimide, polyvinylidene fluoride, polyphenylsulfone, polyaryletherketone, polyacrylonitrile, polychlorotrifluoroethylene, polyetherketone, polyimide, polyisobutene, polyphthalamide, polypyrrole, polytetrafluoroethylene, polyurethane, polyvinyl alcohol, polyvinyl acetate, polyvinylidene chloride, polylactic acid and mixtures thereof, further preferably the thermoplastic material is selected from the group consisting of acrylonitrile-butadiene-styrene copolymers, polyvinyl chloride, polymethyl methacrylate, polyethylene, polylactic acid and polypropylene; the thermoplastic material polypropylene is particularly preferred.

3. The edging strip (1) according to any of the preceding claims, **characterized in that** the conductivity additive is carbon-based or metal-based, preferably selected from the group consisting of carbon black, graphite, carbon nanotubes, carbon fibers, metal particles, metal-coated glass fibers and mixtures thereof, particularly preferably carbon black.

4. The edging strip (1) according to any of the preceding claims, **characterized in that** the tribology additive is polytetrafluoroethylene, polyoxymethylene, polyketone, polyethylene, in particular UHMW polyethylene, or a mixture thereof, particularly preferably polyketone or UHMW polyethylene.

5. The edging strip (1) according to any of the preceding claims, **characterized in that** the material of the edging strip (1) has an electrical conductivity measured in the passage of 5*10⁻¹⁰ up to 5*10⁻⁶ S.

6. The edging strip (1) according to any of the preceding claims, **characterized in that** the edging strip (1) has a surface resistance of 10⁶ ohm or less, preferably 5*10⁵ ohm or less, further preferably 10⁵ ohm or less, particularly preferably 5*10⁴ ohm or less, measured according to IEC 61340-4-1, in particular IEC 61340-4-1, edition 2016-04.

7. The edging strip (1) according to any of the preceding claims, **characterized in that** the edging strip (1) has a contact resistance of 10⁶ ohm or less, preferably 5*10⁵ ohm or less, further preferably 10⁵ ohm or less, particularly preferably 5*10⁴ ohm or less, measured according to IEC 61340-4-1, in particular IEC 61340-4-1, edition 2016-04.

8. The edging strip (1) according to any of the preceding claims, **characterized in that** the edging strip (1) has a fire behavior of at least class E according to the DIN EN 13501 standard.

9. The edging strip (1) according to any of the preceding claims, **characterized in that** the edging strip (1) has a thickness of 0.2 to 5 mm, preferably 0.2 to 2 mm, further preferably 0.2 to 1 mm and/or a width of 10 to 120 mm, preferably of 25 to 60 mm.

10. The edging strip (1) according to any of the preceding claims, **characterized in that** the edging strip (1) comprises an adhesion promoter and/or a hot-melt adhesive, in particular comprises an adhesion promoter layer.

11. The edging strip (1) according to claim 10, **characterized in that** the hot-melt adhesive is a hot-melt adhesive based on a polyamide, a polyethylene, an amorphous polyalphaolefin, a polyester elastomer, a thermoplastic polyurethane (TPU), a reactive polyurethane, an ethylene-vinyl acetate copolymer, or a copolyamide elastomer.

12. The edging strip (1) according to any of the preceding claims, **characterized in that** a nonwoven material is laminated onto the edging strip (1).

13. A method for manufacturing an edging strip (1) according to any of the preceding claims, comprising the steps of:
a) providing a composition containing a thermoplastic material, a conductivity additive and a tribology additive, **characterized in that** the tribology additive is a plastic,
b) supplying mechanical and/or thermal energy to the composition of step a) to obtain a molding compound,
c) forming the edging strip (1) from the molding compound.

14. The method according to claim 13, **characterized in that** the method comprises an extrusion step.

15. A raised floor element (2) comprising a panel (3) and an edging strip (1) attached thereto according to any of claims 1 to 12.

## Revendications

1. Baguette de bordure (1), en particulier baguette de bordure de plancher surélevé, contenant un matériau thermoplastique, un additif de conductivité et un additif tribologique, **caractérisée en ce que** l'additif tribologique est une matière plastique.

2. Baguette de bordure (1) selon la revendication 1, **caractérisée en ce que** le matériau thermoplastique est une matière plastique thermoplastique, de préférence choisie dans le groupe constitué de chlorure de polyvinyle, polypropylène, polyéthylène, polystyrène, copolymères styrène-butadiène, copolymères acrylonitrile-styrène-ester acrylique, copolymères acrylonitrile-butadiène-styrène, styrène-acrylonitrile, polybutylène téréphtalate, polyéthylène téréphtalate, polyoxyméthylène, polyamide, polyméthacrylate de méthyle, polyoxyde de phénylène, polyétheréthercétone, polysulfure de phénylène, polymère cristaux liquides, polyamide-imide, polyfluorure de vinylidène, polyphénylsulfone, polyaryléthercétone, polyacrylonitrile, polychlorotrifluoroéthylène, polyéthercétone, polyimide, polyisobutène, polyphtalamide, polypyrrole, polytétrafluoroéthylène, polyuréthane, alcool polyvinylique, acétate de polyvinyle, chlorure de polyvinylidène, acide polylactique et leurs mélanges, plus préférablement, le matériau thermoplastique est choisi dans le groupe constitué de copolymères acrylonitrile-butadiène-styrène, chlorure de polyvinyle, polyméthacrylate de méthyle, polyéthylène, acide polylactique et polypropylène, de manière particulièrement préférée, le matériau thermoplastique est du polypropylène.

3. Baguette de bordure (1) selon l'une des revendications précédentes,
**caractérisée en ce que** l'additif de conductivité est à base de carbone ou à base de métal, de préférence choisi dans le groupe constitué de noir de carbone, graphite, nanotubes de carbone, fibres de carbone, particules métalliques, fibres de verre revêtues de métal et leurs mélanges, de manière particulièrement préférée est du noir de carbone.

4. Baguette de bordure (1) selon l'une des revendications précédentes,
**caractérisée en ce que** l'additif tribologique est du polytétrafluoroéthylène, du polyoxyméthylène, de la polycétone, du polyéthylène, en particulier du polyéthylène de masse moléculaire très élevée, ou un mélange de ceux-ci, de manière particulièrement préférée est de la polycétone ou du polyéthylène de masse moléculaire très élevée.

5. Baguette de bordure (1) selon l'une des revendications précédentes,
**caractérisée en ce que** le matériau de la baguette de bordure (1) présente une conductivité électrique mesurée en passage allant de 5 * 10⁻¹⁰ à 5 * 10⁻⁶ S.

6. Baguette de bordure (1) selon l'une des revendications précédentes,
**caractérisée en ce que** la baguette de bordure (1) présente une résistance de surface de 10⁶ ohm ou moins, de préférence de 5 * 10⁵ ohm ou moins, plus préférablement de 10⁵ ohm ou moins, de manière particulièrement préférée de 5 * 10⁴ ohm ou moins, mesurée selon la norme CEI 61340-4-1, en particulier la norme CEI 61340-4-1, édition 2016-04.

7. Baguette de bordure (1) selon l'une des revendications précédentes,
**caractérisée en ce que** la baguette de bordure (1) présente une résistance en passage de 10⁶ ohm ou moins, de préférence de 5 * 10⁵ ohm ou moins, plus préférablement de 10⁵ ohm ou moins, de manière particulièrement préférée de 5 * 10⁴ ohm ou moins, mesurée selon la norme CEI 61340-4-1, en particulier la norme CEI 61340-4-1, édition 2016-04.

8. Baguette de bordure (1) selon l'une des revendications précédentes,
**caractérisée en ce que** la baguette de bordure (1) présente une réaction au feu d'au moins la classe E selon la norme DIN EN 13501.

9. Baguette de bordure (1) selon l'une des revendications précédentes,
**caractérisée en ce que** la baguette de bordure (1) présente une épaisseur allant de 0,2 à 5 mm, de préférence de 0,2 à 2 mm, plus préférablement de 0,2 à 1 mm et/ou une largeur allant de 10 à 120 mm, de préférence de 25 à 60 mm.

10. Baguette de bordure (1) selon l'une des revendications précédentes,
**caractérisée en ce que** la baguette de bordure (1) comprend un agent adhésif et/ou une colle thermofusible, en particulier comprend une couche d'agent adhésif.

11. Baguette de bordure (1) selon la revendication 10, **caractérisée en ce que** la colle thermofusible est une colle thermofusible à base d'un polyamide, d'un polyéthylène, d'une polyalphaoléfine amorphe, d'un élastomère de polyester, d'un polyuréthane thermoplastique (TPU), d'un polyuréthane réactif, d'un copolymère éthylène-acétate de vinyle, ou d'un élastomère de copolyamide.

12. Baguette de bordure (1) selon l'une des revendications précédentes,
**caractérisée en ce qu'**un non-tissé est laminé sur la baguette de bordure (1).

13. Procédé de fabrication d'une baguette de bordure (1) selon l'une des revendications précédentes, comprenant les étapes consistant à
a) mettre à disposition une composition contenant un matériau thermoplastique, un additif de conductivité et un additif tribologique, dans lequel l'additif tribologique est une matière plastique,
b) amener une énergie mécanique et/ou thermique à la composition de l'étape a) afin d'obtenir une masse à mouler,
c) mouler la baguette de bordure (1) à partir de la masse à mouler.

14. Procédé selon la revendication 13, **caractérisé en ce que** le procédé comprend une étape d'extrusion.

15. Élément de plancher surélevé (2) comprenant un panneau (3) ainsi qu'une baguette de bordure (1) selon l'une des revendications 1 à 12 fixée à celui-ci.
